# EUROPÄISCHE PATENTSCHRIFT

(11) **EP 1 714 728 B1**
(45) Veröffentlichungstag und Bekanntmachung des Hinweises auf die Patenterteilung: **08.01.2014**
(21) Anmeldenummer: 06007142.0
(22) Anmeldetag: 04.04.2006
(51) Int. Cl.: B23K 9/16

(54) **Schweissen hochfester Stähle**
High strength steel welding
Soudage d'acier à haute résistance

(30) Priorität: 22.04.2005 DE 102005018876
(43) Veröffentlichungstag der Anmeldung: 25.10.2006
(73) Patentinhaber: Linde AG, 80331 München (DE)
(72) Erfinder: Miklos, Ernst, 85551 Kirchheim (DE)
(74) Vertreter: Kasseckert, Rainer

(56) Entgegenhaltungen:
- EP-A- 1 256 410
- WO-A-02/47859
- WO-A-98/58758
- US-A- 4 749 841

## Beschreibung

Die Erfindung betrifft ein Verfahren zum Metall-Schutzgas (MSG)-Schweißen von unlegierten oder anderen legierten, hochfesten Stählen mit abschmelzender Elektrode gemäß Anspruch 1. WO 98/58758 offenbart ein Verfahren zum Metall-Schutzgas-Schweißen.

Die Begriffe "unlegierte" und "andere legierte" Stähle sind in der DIN-Norm EN 10020 (Juli 2000) definiert. Die Norm unterscheidet zwischen unlegierten Stählen, nichtrostenden Stählen und anderen legierten Stählen. Die Erfindung bezieht sich hier allein auf unlegierte Stähle und auf andere legierte Stähle nach dieser Definition. Dabei kommt zusätzlich als unterscheidendes Merkmal das Merkmal "hochfest" hinzu, welches neue Stahlsorten umfasst, die auch ultrahochfest, höhefest und höchstfest genannt werden. Als hochfeste Stähle sollen Stähle mit einer Streckgrenze oberhalb 360 MPa bezeichnet werden. Eingeschlossen sind hier auch Mehrphasenstähle, DP-TWIP- TRIP- vorlegierte, höherlegierte, hochfeste und ähnliche Stähle. Die anderen legierten Stähle wurden früher als niedriglegierte Stähle bezeichnet, die nicht rostenden Stähle mit einem Chromgehalt von mindestens 10,5 % wurden früher als hochlegierte Stähle bezeichnet.

Das Metall-Schutzgas (MSG)-Schweißen ist seit Jahren das überwiegend eingesetzte Verfahren zum Fügen metallischer Werkstoffe und in der ISO 857 definiert und beschrieben. Im Wesentlichen wird in einem Lichtbogen, der zwischen einer oder mehreren abschmelzenden Elektrode(n) und einem oder mehreren Werkstücken brennt, Zusatzwerkstoff eingebracht. Dabei entsteht eine Verbindung mit dem Grundwerkstoff, der ebenfalls aufgeschmolzen wird. Je nach eingesetztem Schutzgas wird unterschieden zwischen MIG Schweißen (mit inertem Gas) oder MAG Schweißen (mit aktivem Gas). Die Schutzgasauswahl richtet sich nach den zu schweißenden Werkstoffen.

Beim Schweißen von unlegierten und anderen legierten Stahlwerkstoffen ist das MAG Schweißen mit aktiven Gasen, die hauptsächlich Kohlendioxid (im weiteren CO2) und/oder Sauerstoff (im weiteren O2) neben Argon enthalten, Stand der Technik. Manchmal wird ein Teil des Argons durch He ersetzt, um einen besseren Wärmeübertrag zu erreichen. Diese Gase decken den ganzen Leistungsbereich ab und können für unterschiedliche Werkstoffübergänge (Lichtbogenarten: Kurz-, Sprüh-, Impuls-, Rotationslichtbogen, etc.) eingesetzt werden. In der DIN-EN 439 und ISO 14175, in denen die Schweißschutzgase beschrieben werden, sind es die Gruppen M2 und M3, die für diese Anwendung vorgesehen sind. Diese Gruppen enthalten mindestens 3 % O2 oder mindestens 5 % CO2. Dieser Anteil an aktiven, oxidierenden Gasen wird als notwendig betrachtet, um Prozessstabilität, Wärmeeintrag, Einbrand, etc. zu gewährleisten. Diese Gase werden im Lichtbogen teilweise dissoziert und ionisiert, teilweise ergibt die Reaktion mit den Elementen des Grund- und Zusatzwerkstoffes Oxidationsprodukte, die nach dem Schweißen als Ablagerung auf und am Rand der Schweißnaht wieder zu finden sind. Umgangssprachlich werden diese Oxide auch als "Schlacke" oder "Silicate" bezeichnet (Silizium ist Bestandteil der meisten Schweißdrahtelektroden, die hier benützt werden, bei den Reaktionen im Lichtbogen wird Si in Anwesenheit von O2 oxidiert). Bei hohen qualitativen Ansprüchen wie z.B. im Druck- und Behälterbau oder im bauaufsichtlichen Bereich werden die Zusatzwerkstoffe in Kombination mit Gasen einer bestimmten Schutzgasgruppe aus der DIN-EN 439 zugelassen.

Das Kennblatt für Schweißzusätze des RWTÜV zur Marke Union K52 empfiehlt Schutzgase der Gruppe M21. Die Datenblätter der Thyssen Schweißtechnik Deutschland zu den Elektroden Union X90, Union X96, Union K56 und Union MoNi empfehlen Schutzgase der Gruppen M21 oder C1 nach DIN EN 439.

Seit einiger Zeit wird versucht, über die Reduzierung des Aktivgasanteils eine Verbesserung der Festigkeitswerte in der Schweißnahtverbindung zu erreichen. In Transactions JWRI, Vol. 32 (2003), No. 1, Seiten 113 und 114 von Takahashi et al. wird eine Untersuchung aus Japan beschrieben, bei der sogar reines Argon eingesetzt wurde, um den Vergleich mit höher CO2-haltigen Gasen zu veranschaulichen. Hier diente die Reduzierung des CO2-Anteiles der Verbesserung der mechanischen Eigenschaften der Schweißnaht. Es ist somit belegt, dass beim Schweißen hochfester Stähle eine Reduzierung von 40 oder 25 % CO2 auf ca. 10 % CO2 im Schutzgas eine positive Wirkung auf die Festigkeitswerte hat. Das reine Argon wird aber nicht empfohlen, der Artikel endet mit der Empfehlung zu 10 % CO2.

Das Schweißen mit reinem Argon an Baustahl ist zwar möglich, aber unbrauchbar. Im Jahrbuch der Schweißtechnik 2003 des DSV-Verlages (Seite 92), beschreibt Th.

Ammann den Stand der Technik. In Bildanhang 4 sind zwei Nähte, die unter inerten Gasen geschweißt wurden, zu sehen. Offensichtlich sind solche Nähte in der Praxis unbrauchbar.

Für Baustähle empfiehlt der Linde Prospekt "Schweißschutzgase" Gase der Klassen M23, M24, M21, M31, M22 und C1.

Die US 4,973,822 empfiehlt zum Schweißen von "Carbon-Stählen" (amerikanisch für unlegierte Stähle, Baustähle) ein Gasgemisch mit 0,5 bis 1,25 % CO2, 30-40 % Helium, Rest Argon.

Für völlig andere Werkstoffe, nämlich hochlegierte - im Sinne der nichtrostenden, "korrosionsbeständigen" - Stähle, werden nach der EP 5 44 187 Gase mit 0,01-0,5 Vol.% CO2 oder O2 in Argon oder in Argon/Helium vorgeschlagen. Solche Gase kommen für den Fachmann zum Schweißen niedriglegierter Stähle nicht in Betracht, da allgemeines Fachwissen ist, einen Mindestgehalt als aktivem Sauerstoff entweder durch höhere Beigaben von CO2 oder von O2 einzustellen.

In den letzten Jahren hat die Entwicklung neuer, hochfester (ultra-hochfester, höchstfester) Stahlsorten eine grundsätzliche Reduzierung der eingesetzten Materialstärken ermöglicht. (Vereinfachung: nachfolgend als "höherfeste" Stähle bezeichnet werden Stähle mit einer Streckgrenze oberhalb 360 MPa; eingeschlossen sind hier auch Mehrphasen-, DP-, TWIP-, TRIP-, Bor-legierte, höherlegierte hochfeste Stähle und ähnliche.) Die höhere Festigkeit erlaubt eine gewichtssparende Konstruktion mit geringeren Querschnitten. Besonders im Automobilbau haben sich neue Stahlsorten wie Dual-Phasen, TRIP/TWIP-Stähle, CP-Stähle, Bor-legierte, niedriglegierte etc. etabliert. Solche Stähle sind auf der Internetseite www.arcelorauto.com/v_all/produits/guide_choix2.htm oder der Unterseite definitions4.htm oder der Unterseite synthese.htm zu entnehmen. Auch dem Prospekt der ThyssenKrupp Schweißtechnik mit der Bezeichnung: "Vergleich der TKS-Bezeichnungen mit entsprechenden Normen" sind einige neue moderne Stahlsorten zu entnehmen. Auch diese hochfesten Bleche der Automobilindustrie werden heute durchwegs mit den üblichen Schutzgasen für das MAG Schweißen herkömmlicher Baustahlsorten geschweißt: M2 nach DIN-EN 439. Das Schlackeproblem ist nicht gelöst. Aber auch im Schiff- und Stahlbau werden höherfeste Feinkornstähle inzwischen genutzt, allerdings handelt es sich hier um dickere Bleche und Profile. Mit zunehmender Festigkeit der Stähle als Grundwerkstoff müssen aber auch hochfeste Zusatzwerkstoffe als Drahtelektrode eingesetzt werden. Diese höherfesten Zusatzwerkstoffe/Drahtelektroden sind meist mit einigen zusätzlichen Legierungselementen versehen (Ni, Mo, Cr. Ti, Mn, etc.), die in Verbindung mit den aktiven Gasen aus dem Schutzgas beim Schweißen besonders stark haftende Oxide, teilweise fein verteilt, an der Nahtoberfläche oder am Nahtrand ergeben.

Um die Korrosionsbeständigkeit der Bauteile aus diesen Stählen zu gewährleisten, wird mit Beschichtungen gearbeitet, z.B. auf Basis von Zink oder Aluminium. Auch Lacke, organische Stoffe, Zinn, oder Kombinationen und/oder Oxide von mehreren Stoffen werden eingesetzt. In einer Variante werden die Bleche vor dem Fügeprozess beschichtet, meistens direkt im Stahlwerk als Bestandteil des Walzprozesses. Während des Schweißprozesses wird aber die Beschichtung zerstört und somit die Korrosionsbeständigkeit des Bauteils beeinträchtigt. Aus diesem Grund wird manchmal der un- oder nur teil-beschichtete Grundwerkstoff geschweißt und erst danach das komplette Bauteil beschichtet. Somit ist der Korrosionsschutz auch für den Bereich der Naht gegeben. Beim Beschichten von MAG geschweißten Bauteilen erweisen sich aber die oben genannten Oxidablagerungen auf und am Rand der Schweißnaht als besonders gefährlich. Wenn diese Ablagerungen nach dem Schweißen nicht entfernt werden (zusätzlicher Arbeitsschritt, kostenintensiv) kann die nachträglich aufgebrachte Beschichtung genau an diesen "Inseln" mitsamt Oxiden abplatzen, wodurch die Korrosionsbeständigkeit / Funktionalität des gesamten Bauteiles beeinträchtigt wird.

Aufgabe dieser Erfindung ist es, ein Verfahren zu finden, mit dem ein sicheres Schweißen von Bauteilen aus Stahlwerkstoffen mit dem MAG Prozess möglich ist, so dass das Bauteil anschließend beschichtet werden kann, ohne dass ein zusätzliches Entfernen der Oxide erforderlich ist. Dabei soll eine ausreichende Haftung gewährleistet sein.

Diese Aufgabe wird erfindungsgemäß gelöst durch die Verwendung eines Schweißgases mit den Merkmalen des Anspruchs 1. Ausführungen der Erfindung sind Gegenstände von Unteransprüchen. Überraschend hat sich gezeigt, dass gerade diese Mikrobeimischungen von CO2 und von O2 bei den anderen legierten Stählen hervorragende Schweißergebnisse liefem. Die Schweißergebnisse sind wesentlich besser als mit den bekannt üblichen hohen Beimischungen und wesentlich besser als mit reinen Edelgasen.

Das Verfahren eignet sich ganz besonders für Bleche mit Blechstärken < 5 mm, bevorzugt < 3 mm, wie sie heute im Automobilbau umfangreich eingesetzt werden. Eine Untergrenze für die Blechdicke gibt es nicht. Die Dotierungen im Gas können bis zur "Foliendicke" wirksam sein, die z.B. bei 0,01 mm liegt.

Abweichend vom bisherigen Stand der Technik ist es gelungen, reproduzierbare Schweißnähte zu erstellen, wobei der Anteil an aktiven Gasen im Schweißschutzgas weit unter den normativ benannten > 5 % CO2 oder > 3 % O2 liegt. (M2 und M3 nach DIN-EN 439).

Besonders bei hochfesten Stahlsorten tragen die Legierungselemente in gewissem Maße schon einer Lichtbogenstabilisierung bei. Elemente wie z.B. Ti, Ni, Cr, MN weisen eine geringere lonisationsenergie auf als Eisen, siehe Tabelle von NIST (im Internet: www.physics.nist.gov/PhysRefData/IonEnergy/tblNew.html). Besonders im Metalldampfzustand, der im Lichtbogen herrscht, können diese Elemente bevorzugte Ladungsträger bilden, wodurch in inerter Atmosphäre ein stabilerer Prozess möglich ist als bei herkömmlichen Baustählen. Zusätzlich ist bekannt, dass Elemente wie Ti, Cr oder Ni eine wesentlich höhere Affinität gegenüber Sauerstoff haben. Da beim MSG-Schweißen auch in einer so genannten inerten Atmosphäre unter Argon oder Ar/He immer ein paar ppm Umgebungsluft eingewirbelt werden, findet eine bevorzugte Oxidation dieser Elemente statt. Die Gegenwart von Metall und Metalloxid bildet aber ein Dielektrikum mit bevorzugter Elektronenemission. Eine erleichterte Elektronenemission an der Kathode führt erfindungsgemäß zu einer Stabilisierung des Lichtbogens.

Da die Menge an Oxiden an der Nahtoberfläche sehr stark von dem Anteil an aktiven Komponenten im Schutzgas abhängt, führt die erfindungsgemäße Verwendung dieser besonderen Schutzgasen mit sehr geringem Aktivgasanteil dazu, dass eine Schweißnahtverbindung oxidarm oder praktisch oxidfrei an der Oberfläche ist und somit ohne zusätzliche Reinigung eine Nachbearbeitung mittels Beschichtung erlaubt, ohne dass störende Oxidreste an der Oberfläche die Haftung der Beschichtung gefährden. Komplette Arbeitsgänge für die Entfernung der Oxidprodukte können damit entfallen.

Bevorzugt wird ein Impulslichtbogen verwendet, z.B. mit Frequenzen zwischen 80-130Hz für Elektrodendurchmesser von ca. 1,0mm, Mittelwerte der Spannung liegen bedingt durch den Heliumgehalt bei den meisten Proben zwischen 22 und 30V, der mittlere Strom liegt bei 120-160 Ampere. Bei Einsatz anderer Elektrodendurchmesser können die Parameter entsprechend angepasst werden.

Die Erfindung ist nicht auf einen typischen Werkstoffübergang im Impulslichtbogen eingeschränkt. Beim Impulslichtbogen wird ein regelmäßiger tropfenförmiger Werkstoffübergang erreicht, beim Kurzlichtbogen erfolgt der Werkstoffübergang in der Kurzschlussphase, beim Sprühlichtbogen erfolgt der Werkstoffübergang feintröpfig (Spray) während eines überwiegend konstanten Strom/Spannungsverlaufes. Bei den hier behandelten Blechdicken ist der Kurzlichtbogen interessant, weil der Wärmeeintrag in das Blech mit dieser Lichtbogenform reduziert werden kann. Neuere Geräteentwicklungen ermöglichen auch getriggerte, pulsförmige Ströme/Spannungen, mit denen der Werkstoffübergang im Kurzschluss auch gepulst werden kann. Zusätzlich gibt es Prozesse, die neben der Pulsung der elektrischen/elektronischen Parameter, auch die Drahtzufuhr mechanisch pulsen können (regelmäßige Draht-Vor- und Rückwärtsbewegung oder Draht-Vorwärtsbewegung mit Stillstandspausen). Da die physikalischen Stabilisierungs-Phänomene, die hier für den klassischen Imputslichtbogen beschrieben wurden, auch für die anderen Lichtbogenarten gelten, ist die Übertragbarkeit der Verfahrensvorteile auf alle anderen möglichen Lichtbogenarten und Prozessvarianten bei Einsatz an den hier beschriebenen Werkstoffen und Blechdicken gegeben.

Die Erfindung wird anhand von sechs Figuren näher erläutert. Dabei zeigen die Figuren 1 bis 6 Schliffbilder von Schweißnähten.

Es zeigen
- Figur 1: den Einfluss des CO2-Anteils im Schweißschutzgas Argon auf die Oxidbildung
- Figur 2: den Einfluss des Heliumanteils auf die Nahtbreite
- Figur 3: denn Einfluss von aktiven Dotierungen gemäß der Erfindung auf Prozessstabilität, Nahtbild und Einbrand
- Figur 4: den Einfluss unterschiedlicher Edelgase auf das Schweißverhalten herkömmlicher Stahlbleche
- Figur 5: den Einfluss des Grundwerkstoffs auf die Lichtbogenstabilität und
- Figur 6: Schweißnähte, die mit dem erfindungsgemäßen Gas geschweißt wurden.

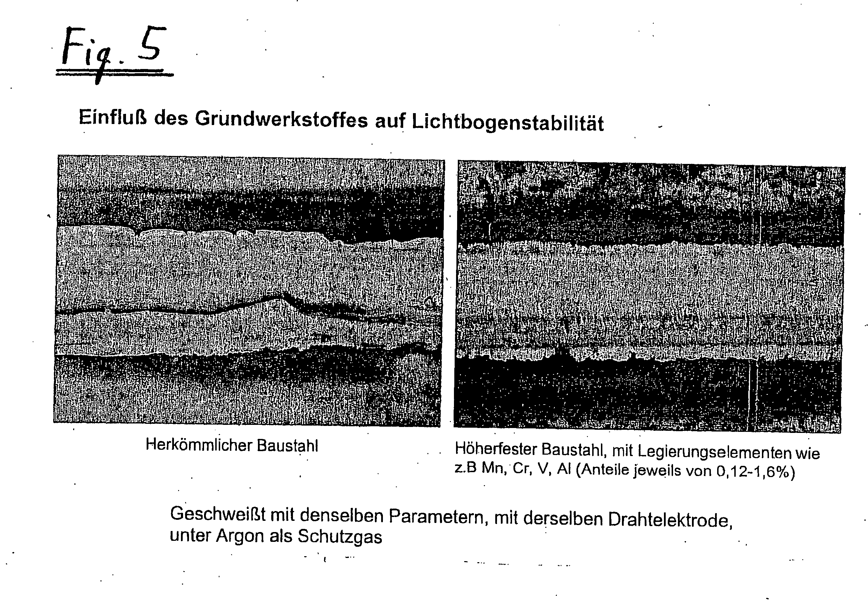

Der Einfluss des Grundwerkstoffs wird anhand von Figur 5 gezeigt. Dort wird links herkömmlicher Baustahl und rechts höherfester Baustahl, mit Legierungselementen wie z.B. Mn, Cr, Bau, Al (Anteile jeweils von 0,12 - 1,6 %) gezeigt. Geschweißt wurde mit denselben Parametern, mit derselben Drahtelektrode und unter reinem Argon als Schutzgas. Während im linken Bild anhand der unregelmäßigen Nahtzeichnung ("Nahtrand") zu erkennen ist, dass dieser Lichtbogen sehr unruhig war, der Fußpunkt am kathodischen Blech sehr breit, unregelmäßig und nicht reproduzierbar gewandert ist, kann man im rechten Bild beobachten, dass schon durch den Effekt der zusätzlichen Legierungselemente im Grundwerkstoff eine Verbesserung eintritt: der Prozess wird ruhiger, die Naht sieht etwas regelmäßiger aus. Trotz dieser zwei Phänomene (Stabilisierung durch Legierungselemente im Grundwerkstoff, Stabilisierung durch Elemente im Zusatzwerkstoff/Drahtelektrode), die einen stabileren Lichtbogen unterstützen, ist unter rein inerten Gasen kein akzeptables Schweißergebnis möglich.

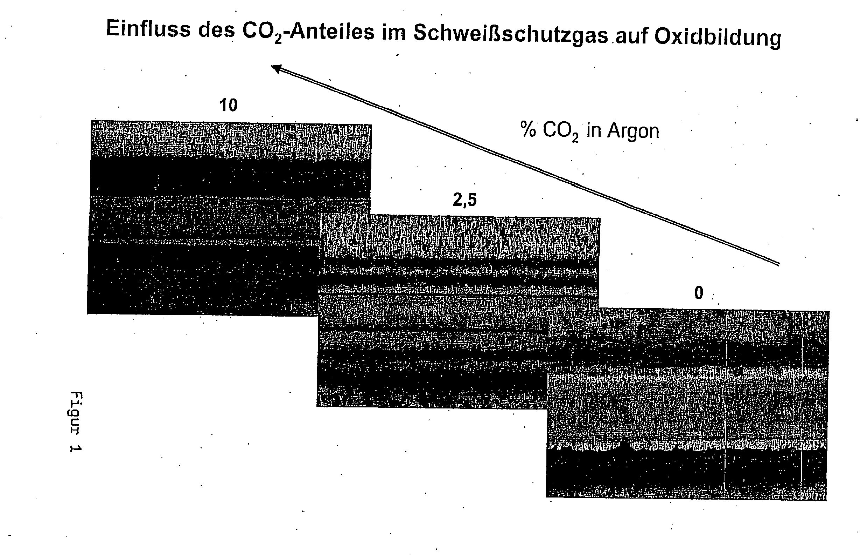

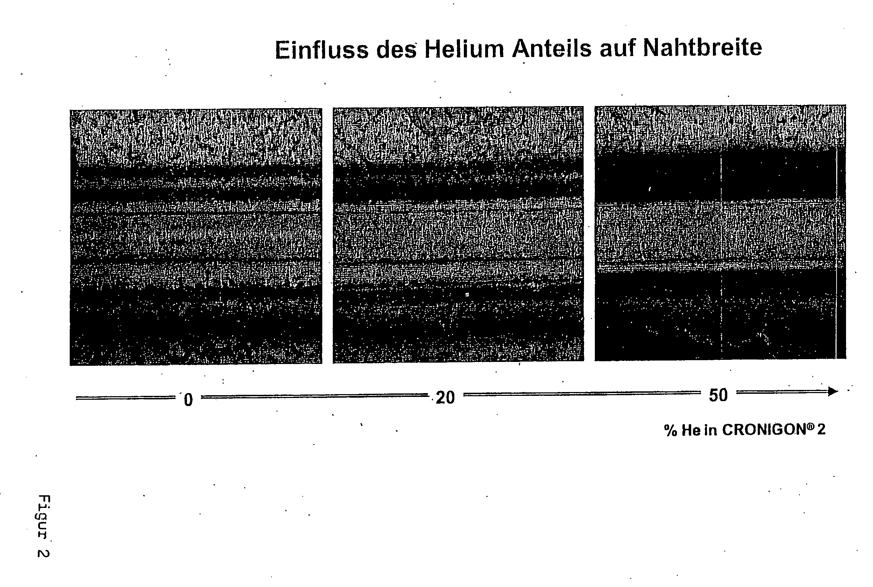

Die Figuren 1 bis 3 zeigen Ergebnisse aus eigenen Versuchen an einem hochfesten Stahl, wie er in der Automobilindustrie verwendet wird, legiert mit Mn, Cr, V, Al, wobei die Anteile jeweils von 0,12 bis 1,6 % variieren. Als Zusatzwerkstoff wurde ein typischer MAG Draht für höherfeste Verbindungen verwendet, der die Bezeichnung OK Autrod13.31 von Esab hat.

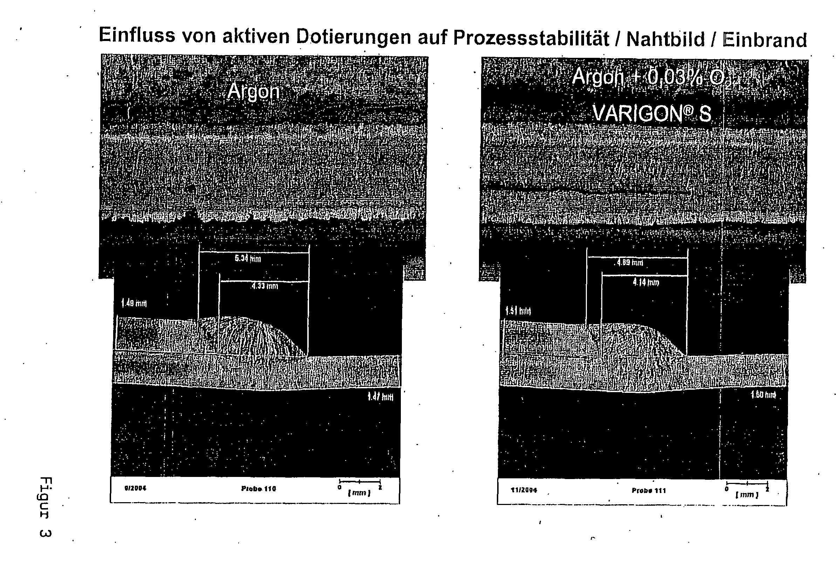

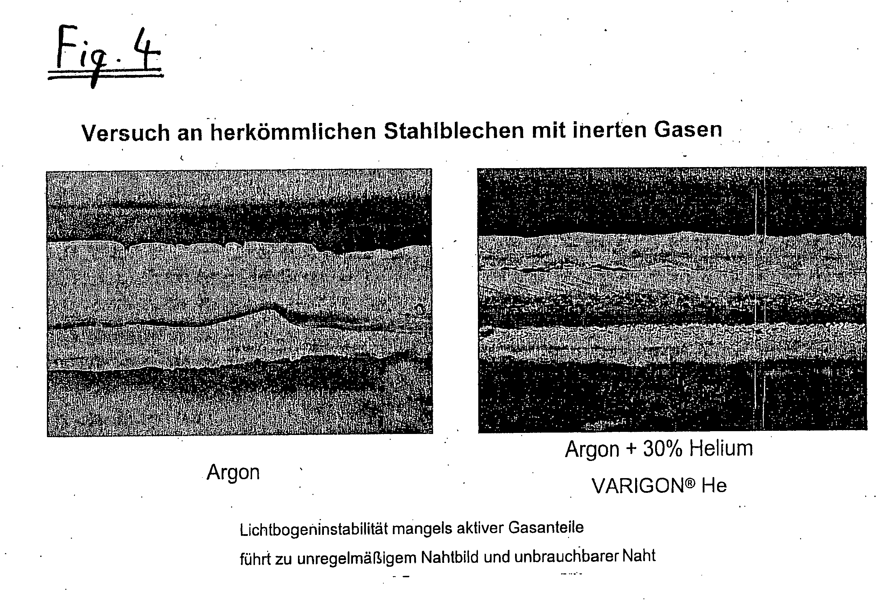

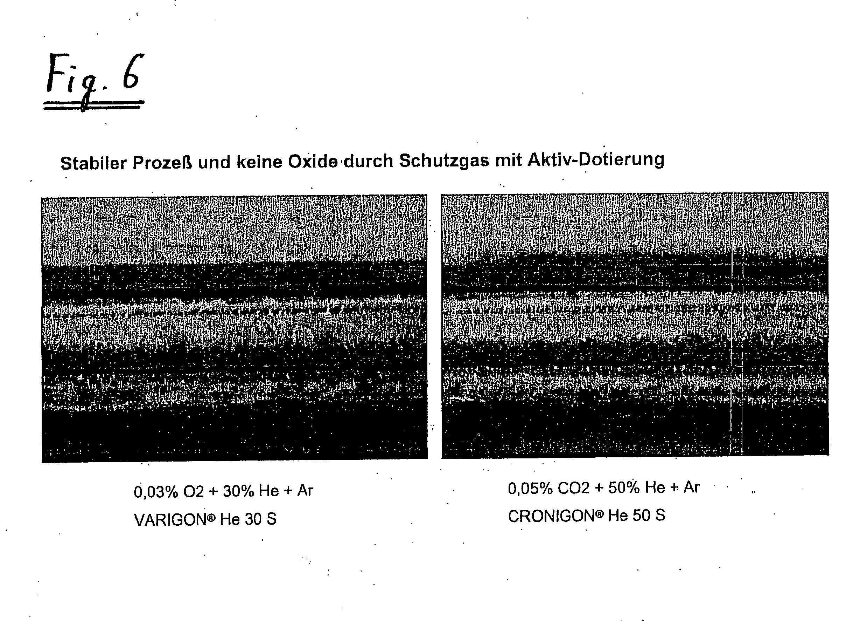

Die Wirkung des erfindungsgemäßen Gasgemisches wird durch Vergleiche der Figuren 1 bis 4 und 6 deutlich. Schon an der unregelmäßigen Nahtoberfläche unter der unter Argon geschweißten Probe in Figur 1 ist zu erkennen, dass der Lichtbogen immer noch sehr unruhig war. Verglichen mit den gleichmäßigen Nähten unter Mischgas mit 10 % bzw. 2,5 % CO2 ist festzuhalten, dass zwar die Oxidation an der Nahtoberfläche tatsächlich vermieden werden konnte, aber der instabile Prozess führt zu einer nicht brauchbaren Naht. Zusätzlich ist im linken Bild der Figur 3 ein mangelnder Einbrand festzustellen. Dies ist zurückzuführen auf die die mangelnde Wärme im Lichtbogen unter reinem Argon. Um die Wärmebilanz zu verbessern, kann man Helium dem Argon beimischen, so wie es in der Veröffentlichung von Herrn Ammann empfohlen wird (DVS Jahrbuch der Schweißtechnik 2003). Aber Helium macht den Lichtbogen noch unruhiger - aufgrund der höheren lonisationsenergie gegenüber Argon. Versuche mit geringen Aktivgasanteilen, unterhalb 0,1 % O2 oder CO2, führten zu guten Ergebnissen. Bereits 0,03 % O2 in dem VARIGON S Gemisch führten zu besseren Ergebnissen als unter reinem Argon, siehe Figur 3.

Bezogen auf die Zusammensetzung des Schutzgases wurde festgestellt:
- auch bei Werten um 2,5 % CO2 oder 1 % O2, (typisch für Gasgemische beim MAG Schweißen von hochlegierten Stählen, aber nicht für unlegierte Stähle) ist die Nahtoberflächenoxidation ausgeprägt, siehe mittleres Bild in Figur 1.
- Beimischungen von Helium zu Argon verbessern die Wärmebilanz ohne die Oxidation zu beeinträchtigen, führen aber zu mehr Lichtbogenunruhe
- Geringer aktive Beimischungen, unterhalb 0,5 % von CO2 oder O2 stabilisieren bereits den Lichtbogen und verbessern den Einbrand, ohne gravierende Nachteile der Oxidbildung (Figur 3)

So ist unter Gasen mit nur 0,01 bis 0,5 % CO2 und/oder O2 in Argon oder Ar/He bereits MAG Schweißen von höherfesten Stählen mit einer Wandstärke unterhalb 5 mm möglich.

## Patentansprüche

1. Verfahren zum Metallschutzgas (MSG)-Schweißen von Stahlblechen mit abschmelzender Elektrode, wobei das Schutzgas zum überwiegenden Teil aus Argon oder einer Argon-Helium-Mischung besteht und dass es 0,01 bis 0,5 Vol.% CO2 und/oder O2 enthält, **dadurch gekennzeichnet, dass** die Bleche mit einer Blechstärke < 5 mm aus unlegierten oder anderen legierten hochfesten Stählen hergestellt werden.

2. Verfahren nach Anspruch 1, **dadurch gekennzeichnet, dass** höherfeste Stahlbleche mit einer Blechstärke < 3 mm, aus Stahl, dessen Mindeststreckgrenze > 360 MPa beträgt, geschweißt werden.

3. Verfahren nach Anspruch 1 oder 2, **gekennzeichnet durch** ein Schutzgas, das 0,01 bis 0,4 Vol. % CO2 und/oder 02 enthält.

4. Verfahren nach Anspruch 1 oder 2, **gekennzeichnet durch** ein Schutzgas, das 0,02 bis 0,1 % 02 und/oder CO2 in Argon und/oder in einem Argon-Helium-Gemisch enthält.

5. Verfahren nach einem der vorhergehenden Ansprüche, **gekennzeichnet durch** ein Schutzgas, das 0,1 bis 0,5 % 02 und/oder CO2 und mindestens 15 % Helium in Argon enthält.

6. Verfahren nach einem der vorherigen Ansprüche, **gekennzeichnet durch** einen gepulsten Strom.

7. Verfahren nach einem der vorherigen Ansprüche, **gekennzeichnet durch** einen Impulslichtbogen, einen Kurzlichtbogen oder einem Sprühlichtbogen.

8. Verfahren nach einem der vorherigen Ansprüche, **gekennzeichnet durch** eine mechanisch gepulste Drahtzufuhr.

## Claims

1. Process for the gas metal arc welding (GMAW) of steel sheets with a consumable electrode, wherein the shielding gas consists predominantly of argon or an argon-helium mixture and it contains 0.01 to 0.5% by volume CO₂ and/or O₂, **characterized in that** the sheets are produced with a sheet thickness of < 5 mm from unalloyed or other alloyed high-strength steels.

2. Process according to Claim 1, **characterized in that** higher-strength steel sheets having a sheet thickness of < 3 mm made of steel with a minimum yield strength of > 360 MPa are welded.

3. Process according to Claim 1 or 2, **characterized by** a shielding gas containing 0.01 to 0.4% by volume CO₂ and/or O₂.

4. Process according to Claim 1 or 2, **characterized by** a shielding gas containing 0.02 to 0.1% O₂ and/or CO₂ in argon and/or in an argon-helium mixture.

5. Process according to one of the preceding claims, **characterized by** a shielding gas containing 0.1 to 0.5% O₂ and/or CO₂ and at least 15% helium in argon.

6. Process according to one of the preceding claims, **characterized by** a pulsed current.

7. Process according to one of the preceding claims, **characterized by** a pulsed arc, a short arc or a spray arc.

8. Process according to one of the preceding claims, **characterized by** a mechanically pulsed wire feed.

## Revendications

1. Procédé pour le soudage à l'arc sous gaz protecteur avec métal d'apport (MSG) avec électrode fusible de tôles d'acier, dans lequel le gaz protecteur se compose pour une part prépondérante d'argon ou d'un mélange argon-hélium et contient 0,01 à 0,5 % en volume de CO₂ et/ou de O₂, **caractérisé en ce que** les tôles sont fabriquées avec une épaisseur de tôle < 5 mm en aciers à haute résistance non alliés ou en d'autres aciers à haute résistance alliés.

2. Procédé selon la revendication 1, **caractérisé en ce que** l'on soude des tôles d'acier à plus haute résistance avec une épaisseur de tôles < 3 mm en acier, dont la limite d'élasticité minimale vaut > 360 MPa.

3. Procédé selon la revendication 1 ou 2, **caractérisé par** un gaz protecteur, qui contient 0,01 à 0, 4 % en volume de CO₂ et/ou de O₂.

4. Procédé selon la revendication 1 ou 2, **caractérisé par** un gaz protecteur qui contient 0,02 à 0,1 % de O₂ et/ou de CO₂ dans l'argon et/ou dans un mélange argon-hélium.

5. Procédé selon l'une quelconque des revendications précédentes, **caractérisé par** un gaz protecteur qui contient 0,1 à 0,5 % de 02 et/ou de CO₂ et au moins 15 % d'hélium dans l'argon.

6. Procédé selon l'une quelconque des revendications précédentes, **caractérisé par** un courant pulsé.

7. Procédé selon l'une quelconque des revendications précédentes, **caractérisé par** un arc électrique pulsé, un arc électrique court ou un arc électrique à fusion en pluie.

8. Procédé selon l'une quelconque des revendications précédentes, **caractérisé par** une arrivée de fil pulsée mécaniquement.
